# EUROPÄISCHE PATENTANMELDUNG

(11) **EP 1 365 262 A2**
(43) Veröffentlichungstag der Anmeldung: **26.11.2003**
(21) Anmeldenummer: 03010050.7
(22) Anmeldetag: 02.05.2003
(51) Int. Cl.: G02B 1/11

(54) **Optische Anzeigevorrichtung**

(30) Priorität: 24.05.2002 DE 10223165
(71) Anmelder: SIEMENS AKTIENGESELLSCHAFT, 80333 München (DE)
(72) Erfinder: Förderer, Roland, 78078 Niedereschach (DE); Schlageter, Thomas, 78120 Furtwangen (DE); Wolf, Jürgen, 78048 Villingen-Schwenningen (DE)

(57) **Zusammenfassung**

Die Anzeigevorrichtung besitzt eine Abdeckung aus einem Träger (2) oder einer auf einem Anzeigeelement direkt aufgebrachten Strukturschicht, die mit einer reflexmindernd aufgerauhten Oberflächenstruktur (4) versehen ist, auf der eine Hartschicht als kratzfeste Entspiegelungsschicht (1) aus einem anorganischen Oxid, einer anorganischen oxidischen Verbindung, einem Metallhalogenid oder einem Metall aufgebracht ist, deren von der Abdeckung abgewandte Oberfläche (3) eine durch die Struktur oder Aufrauung der Abdeckung bedingte Struktur oder Aufrauung aufweist.

## Beschreibung

Die vorliegende Erfindung betrifft eine optische Anzeigevorrichtung mit transparenter Abdeckung für Kraftfahrzeuge.

Anzeigevorrichtungen mit transparenten Kunststoffabdeckungen, insbesondere für Pkw- und Nutzfahrzeuge, sollen mittels einer periodisch oder aperiodisch strukturierten Oberfläche dem Fahrer eine blend- und reflexminimierte Sicht auf die Informationsanzeigen bieten.

Bisher hat man dabei undefiniert rau strukturierte Oberflächen auf Si-Gläsern verwendet, die zwar eine gewisse Störlichtminderung bewirken, aber eine gefährliche Splitterneigung bei einem Unfall aufweisen und keine Gestaltung in einer Freiformfläche zulassen. Des Weiteren besitzen diese Gläser keine die Intensität der Reflexe mindernde Entspiegelungsschicht. Derzeit eingesetzte Kunststoffgläser mit Struktur oder Displays mit Antireflexschichten haben auch den Nachteil, dass sie gegen Abrasion, z. B. hervorgerufen durch Putzen der Abdeckscheibe, extrem empfindlich sind.

Das Fraunhofer-Institut für Angewandte Optik und Feinmechanik IOF in Jena bietet kratzfeste Antireflexbeschichtungen für transparente Kunststoffe, insbesondere für PMMA, Polycarbonat, CR39, Topas® und Zeonex®, an. Die kratzfeste Antireflexbeschichtung ("AR-hard", im Folgenden als Antireflexhartschicht bezeichnet) wird mittels Aufdampfprozessen mit Plasma-Ionen-Unterstützung (Plasma-IAD) aufgebracht. Breitband-Antireflexbeschichtungen besitzen Schichtdicken zwischen 0,8 µm und 4 µm. Ein entsprechender Hinweis findet sich im Internet unter der Adresse http://www.iof.fhg.de.

Aufgabe der vorliegenden Erfindung ist es, eine einfach und kostengünstig herstellbare Anzeigevorrichtung anzugeben, die eine blend- und reflexminimierte Sicht auf die Information der Anzeige bietet.

Diese Aufgabe wird mit der Anzeigevorrichtung mit den Merkmalen des Anspruchs 1 gelöst. Ausgestaltungen ergeben sich aus den abhängigen Ansprüchen.

Die Anzeigevorrichtung besitzt eine Abdeckung mit einem Träger aus einem zumindest bis zu einem gewissen Grad transparenten Glas oder Kunststoff, z. B. aus PA (Polyamid), PMMA, PET, Polycarbonat, CR39, CoC, Topas® oder Zeonex® oder aus einem duroplastischen Material wie zum Beispiel einem ungesättigten Polyesterharz (UP) oder einem Epoxidharz, oder mit einer auf einem Anzeigeelement direkt aufgebrachten Strukturschicht. Die Abdeckung ist mit einer reflexmindernd aufgerauten Oberflächenstruktur versehen, auf der eine dünne, gegebenenfalls mehrlagige Entspiegelungsschicht, vorzugsweise eine kratzfeste, optisch entspiegelnde Hartschicht (vorzugsweise halogenidisch, metallen oder keramisch), aufgebracht ist. Die Hartschicht kann beispielsweise enthalten: mindestens ein insbesondere anorganisches Oxid (z. B. TiOₓ, TaO₅ oder SiOₓ), eine oxidische Verbindung, ein Metallhalogenid oder ein Metall. Die Dicke der Abdeckung der Anzeige beträgt typisch 0,3 mm - 5 mm. Die Entspiegelungsschicht, ist so gleichmäßig aufgebracht, dass sie die Oberflächenstruktur der Abdeckung zumindest weitgehend erhält, die von der Abdeckung abgewandte Oberfläche der Entspiegelungsschicht also eine durch die Struktur oder Aufrauung der Abdeckung bedingte Struktur oder Aufrauung aufweist und nach Möglichkeit die Rauigkeit der Oberfläche der Abdeckung reproduziert.

Die Struktur oder Rauigkeit kann periodisch oder aperiodisch sein. Die Größe der Struktur (insbesondere die Rautiefe) hängt vom Abstand der betreffenden Oberfläche zu der abzulesenden Anzeige ab, z. B. zu einem Anzeigenelement (Beispiel: Skalenring des Tachometers und Tachonadel). Mit kleiner werdenden Strukturen der Abdeckung und zunehmendem Abstand zu der Anzeige nimmt die Auflösung, die üblicherweise in Linien pro Millimeter angegeben wird, ab. Abstand und Strukturgröße werden erfindungsgemäß so gewählt, dass das kleinste Zeichen der Anzeige noch gut ablesbar ist.

Der Abstand bei Anzeigenelementen für Kombiinstrumente kann 0,5 mm bis 20 cm betragen und beträgt typisch 7 mm bis 20 mm; bei Displays ist praktisch kein Abstand vorhanden, da die Struktur in der Regel auf einer Folie als Strukturschicht direkt auf die Oberfläche des Displays aufgebracht wird. Die auf der Oberfläche der Abdeckung oder des Displays befindlichen makroskopischen Strukturen haben gemäß dieser Erfindung maximale Rautiefen von typisch 0,7 µm - 500 µm.

Die Dicke d der Entspiegelungsschicht wird vorzugsweise so gewählt, dass die entspiegelnde Wirkung durch optische Interferenz verstärkt wird. Für eine λ/4-Entspiegelung, deren Schichtdicke ein Viertel der zu entspiegelnden sichtbaren Wellenlänge (300 nm - 900 nm) beträgt, wird eine Schichtdicke von etwa 70 nm - 300 nm aufgebracht. Für eine Breitbandentspiegelung werden unterschiedliche Schichtdicken miteinander kombiniert. Für die Entspiegelungsschicht sind insbesondere die eingangs angegebenen Produkte des IOF geeignet (Antireflexhartschicht). Sie besitzen gute abrasive Eigenschaften und ermöglichen eine breitbandige Entspiegelung von bis zu 99 % über den Wellenlängenbereich von 400 nm - 900 nm.

Eine alternative Möglichkeit der Entspiegelung besteht darin, die Entspiegelungsschicht durch mikroskopische Unebenheiten mit einem gleitenden Brechungsindex auszubilden. Dazu werden zum Beispiel kleine Löcher mit Durchmessern, die kleiner sind als die vorgesehene Wellenlänge, (im Nanometerbereich) in der Entspiegelungsschicht hergestellt oder so genannte Mottenaugenstrukturen, die durch winzige Erhebungen auf der Oberfläche der Schicht gebildet sind, hergestellt. Eine derartige poröse, periodisch oder stochastisch strukturierte Hartschicht kann gleichfalls erfindungsgemäß als Entspiegelungsschicht verwendet werden.

Die oben beschriebene Beschichtung ist sowohl für ebene als auch für nicht ebene Abdeckungen von Anzeigen oder Oberflächen von Displays geeignet. Im Fall nicht ebener Abdeckungen, so genannter Freiformen oder Freiformflächen, weisen diese Flächen Krümmungsradien von typisch etwa 1 cm bis 5 m auf; die Krümmungsradien können in besonderen Fällen auch größer sein.

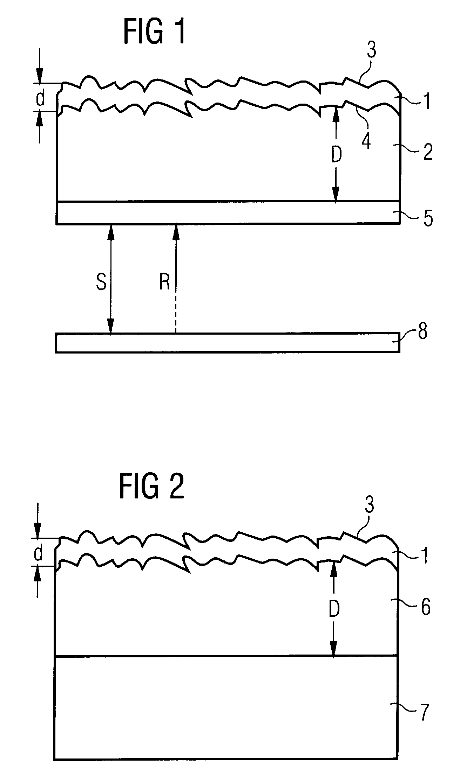

Es folgt eine genauere Beschreibung von Beispielen der Anzeigevorrichtung anhand der beigefügten Figuren 1 und 2.

Figur 1 zeigt einen schematischen Querschnitt durch eine Anzeigevorrichtung mit einer im Abstand zu einem Anzeigeelement angeordneten Abdeckung.

Figur 2 zeigt einen Querschnitt durch ein Anzeigeelement mit einer unmittelbar auf der Anzeige (Display) angebrachten Abdeckung.

Die Oberfläche der Abdeckung eines ersten Ausführungsbeispiels der Anzeigevorrichtung gemäß der Figur 1 besitzt eine Aufrauung, die in der Figur 1 schematisch im Querschnitt dargestellt ist. Die Struktur dieser Aufrauung ist so beschaffen, dass sich die Gestalt der Oberfläche zumindest näherungsweise aufteilen lässt in eine glatte Fläche, die die geometrische Form der Oberfläche im Wesentlichen festlegt, und in lokal darauf vorhandene Unregelmäßigkeiten, die für die Rauigkeit verantwortlich sind. Die beidseitigen Abweichungen der tatsächlichen Oberflächenform von der approximierenden glatten Fläche wird als Rautiefe bezeichnet. Dabei handelt es sich also um die auf enge Bereiche begrenzten Schwankungen der Oberflächenform im Vergleich zu einer mittleren, gleichmäßigen Fläche.

Die in der Figur 1 dargestellte Anzeigevorrichtung besitzt eine Abdeckung mit einer in vorgegebener Dicke d auf einen zumindest teilweise transparenten Träger 2 aus Glas oder Kunststoff aufgebrachten Entspiegelungsschicht 1, vorzugsweise eine optisch entspiegelnde Hartschicht, wie zum Beispiel eine insbesondere anorganische Oxidschicht, eine Schicht aus einer oxidischen Verbindung, eine Metallhalogenidschicht oder eine Metallschicht. Die Oberfläche 4 des Trägers 2, der die eigentliche Abdeckung mit der Dicke D bildet, weist eine Struktur oder Rauigkeit auf. Da die Entspiegelungsschicht 1 in gleichmäßiger Dicke d vorhanden ist, bildet sich die Struktur oder Rauigkeit in der gegenüberliegenden äußeren Oberfläche 3 der Entspiegelungsschicht 1 ab. Die gegenüberliegende, von dem Betrachter abgewandte, Oberfläche des Trägers 2 kann vorzugsweise ebenfalls mit einer Entspiegelungsschicht 5 versehen sein, von der jedoch keine Kratzfestigkeit verlangt wird. Bei Verwendung einer Antireflexhartschicht als Entspiegelungsschicht 1 für eine Breitbandentspiegelung liegt der Wert der Dicke d im Bereich von 0,8 µm bis 10 µm, vorzugsweise bis 4 µm.

Diese Instrumentenabdeckung ist eben oder als Freiformfläche mit dem Krümmungsradius R (hier für das Beispiel einer zum Betrachter konvexen Krümmung eingezeichnet) ausgeführt. Unter einer Freiform oder Freiformfläche der Abdeckung wird im Zusammenhang mit der Anzeigevorrichtung verstanden, dass die Form der Abdeckung kein Ausschnitt aus einer Ebene zu sein braucht, sondern gewölbt ausgebildet sein kann. Die Abdeckung lässt sich so insbesondere in das Armaturenbrett eines Fahrzeugs integrieren. Die Abdeckung kann auch konkav so gestaltet sein, dass die Blickrichtung des Fahrers immer senkrecht zu der Oberfläche der Abdeckung gerichtet ist oder in einem bestimmten vorgegebenen Winkel dazu, um so eine gleichmäßige Blendfreiheit zu gewährleisten. Die Abdeckung der Anzeigevorrichtung kann daher grundsätzlich jede, insbesondere auch die bisher für derartige Abdeckungen verwendete, Form besitzen.

In der Figur 1 ist der Abstand S der Abdeckung zur Anzeige 8 (Display, Instrument, Signalgeber) eingezeichnet, der die Stärke der Struktur beziehungsweise die Rautiefe mit bestimmt. Dieser Abstand S wird so gewählt, dass die sich ergebende optische Auflösung für den Betrachter ausreicht.

Die Figur 2 gibt einen Querschnitt durch ein weiteres Ausführungsbeispiel der Anzeigevorrichtung mit einem Display als Anzeigeelement wieder, bei dem die Entspiegelungsschicht 1 der Dicke d auf einer Oberfläche einer als Abdeckung vorgesehenen Strukturschicht 6 der Dicke D aufgebracht ist. Die Strukturschicht 6 bildet eine Abdeckung, die unmittelbar auf dem Display 7 angeordnet ist. Die Struktur der Strukturschicht 6 wird auch bei diesem Ausführungsbeispiel wegen der gleichmäßigen Dicke d der Entspiegelungsschicht 1 auf deren äußeren Oberfläche 3 reproduziert.

## Patentansprüche

1. Optische Anzeigevorrichtung mit
einem Anzeigeelement, Display oder Signalgeber (7, 8), einer Abdeckung aus einem im Abstand (S) dazu angeordneten, zumindest teilweise transparenten Träger (2) aus Glas oder Kunststoff oder einer direkt darauf aufgebrachten Strukturschicht (6), wobei zumindest eine von dem Anzeigeelement, Display oder Signalgeber (7, 8) abgewandte Oberfläche (4) der Abdeckung eine reflexmindernde Struktur oder Aufrauung besitzt,
**dadurch gekennzeichnet, dass**
die mit der Struktur oder Aufrauung versehene Oberfläche (4) mit mindestens einer Entspiegelungsschicht (1) versehen ist, deren von der Abdeckung abgewandte Oberfläche (3) eine durch die Struktur oder Aufrauung der Abdeckung bedingte Struktur oder Aufrauung aufweist.

2. Optische Anzeigevorrichtung nach Anspruch 1, bei der auf das Anzeigeelement, Display oder den Signalgeber (7, 8) eine Strukturschicht (6) als Abdeckung direkt aufgebracht ist und
auf der Strukturschicht (6) mindestens eine Hartschicht als kratzfeste Entspiegelungsschicht (1) aufgebracht ist, die die Oberflächenstruktur der Strukturschicht (6) gleich oder ähnlich nachbildet.

3. Optische Anzeigevorrichtung nach Anspruch 1, bei der die Abdeckung einen in definiertem Abstand (S) zu einem Anzeigeelement, Display oder Signalgeber (7, 8) angeordneten, periodisch oder aperiodisch strukturierten Träger (2) umfasst, auf dem mindestens eine Hartschicht als kratzfeste Entspiegelungsschicht (1) aufgebracht ist, die die Oberflächenstruktur des Trägers (2) gleich oder ähnlich nachbildet.

4. Optische Anzeigevorrichtung nach Anspruch 3, bei der der Wert des Abstandes (S) der Abdeckung zu einem Anzeigeelement, Display oder Signalgeber (7, 8) im Bereich von 0,5 mm bis 20 cm liegt und
der Wert der Dicke (D) der Abdeckung im Bereich von 0,3 mm bis 5 mm liegt.

5. Optische Anzeigevorrichtung nach Anspruch 4, bei der
der Wert des Abstandes (S) der Abdeckung zu einem Anzeigeelement, Display oder Signalgeber (7, 8) im Bereich von 7 mm bis 20 mm liegt.

6. Optische Anzeigevorrichtung nach einem der Ansprüche 3 bis 5, bei der
der Träger (2) ein thermoplastisches Material aus der Gruppe von PA, PMMA, PET, Polycarbonat, CR39, CoC, Topas® oder Zeonex® ist.

7. Optische Anzeigevorrichtung nach einem der Ansprüche 3 bis 5, bei der
der Träger (2) ein duroplastisches Material ist.

8. Optische Anzeigevorrichtung nach einem der Ansprüche 1 bis 7, bei der
die Abdeckung als nicht ebene Freiformfläche ausgebildet ist und
ein Krümmungsradius (R) der Freiformfläche im Bereich von 1 cm bis 5 m liegt.

9. Optische Anzeigevorrichtung nach einem der Ansprüche 1 bis 8, bei der
die Entspiegelungsschicht (1) eine Antireflexhartschicht für eine Breitbandentspiegelung ist und eine Dicke (d) im Bereich von 0,8 µm bis 10 µm aufweist.

10. Optische Anzeigevorrichtung nach einem der Ansprüche 1 bis 8, bei der
die Entspiegelungsschicht (1) eine Dicke (d) im Bereich von 70 nm bis 300 nm aufweist.

11. Optische Anzeigevorrichtung nach einem der Ansprüche 1 bis 8, bei der
die Entspiegelungsschicht (1) eine mit Strukturen einer Größe im Nanometerbereich versehene poröse oder periodisch oder stochastisch strukturierte Hartschicht ist.

12. Optische Anzeigevorrichtung nach einem der Ansprüche 1 bis 11, bei der
die Struktur eine Rautiefe von 0,7 µm bis 500 µm aufweist.

13. Optische Anzeigevorrichtung nach einem der Ansprüche 1 bis 12, bei der
die Entspiegelungsschicht (1) mindestens ein Oxid oder eine oxidische Verbindung umfasst.

14. Optische Anzeigevorrichtung nach Anspruch 13, bei der
die Entspiegelungsschicht (1) ein Material aus der Gruppe von TiOₓ, TaO₅ oder SiOₓ umfasst.

15. Optische Anzeigevorrichtung nach einem der Ansprüche 1 bis 12, bei der
die Entspiegelungsschicht (1) mindestens ein Metallhalogenid umfasst.

16. Optische Anzeigevorrichtung nach einem der Ansprüche 1 bis 12, bei der
die Entspiegelungsschicht (1) mindestens eine Metallschicht umfasst.
